# EUROPÄISCHE PATENTANMELDUNG

(11) **EP 4 524 855 A1**
(43) Veröffentlichungstag der Anmeldung: **19.03.2025**
(21) Anmeldenummer: 23197860.2
(22) Anmeldetag: 18.09.2023
(51) Int. Cl.: G06Q 10/0832, G06Q 10/0833, A47G 29/14

(54) **VERFAHREN ZUR ZUSTELLUNG VON WAREN**

(71) Anmelder: Sudhaus GmbH, 58644 Iserlohn (DE)
(72) Erfinder: Dr. Keidel, Stephan, 65719 Hofheim (DE)
(74) Vertreter: Feder Walter Ebert

(57) **Zusammenfassung**

Die Erfindung betrifft Verfahren zur Zustellung von Waren an einen Kunden mit einer wiederverwendbaren Logistikbox (L), die ein über ein Schließelement (2) verschließbares Transportbehältnis (1) und ein elektronisches Schloss (3) zur Verriegelung des Schließelements (2) in dessen geschlossener Stellung aufweist, wobei zum Entriegeln des Schlosses (3) eine der Logistikbox (L) zugeordnete Zugriffsberechtigung (Z) an den Kunden übermittelt wird.

## Beschreibung

Die vorliegende Erfindung betrifft ein Verfahren zur Zustellung von Waren an einen Kunden mit einer wiederverwendbaren Logistikbox, die ein über ein Schließelement verschließbares Transportbehältnis und ein elektronisches Schloss zur Verriegelung des Schließelements in dessen geschlossener Stellung aufweist. Einen weiteren Gegenstand der Erfindung bildet eine Logistikbox zur Durchführung eines solchen Verfahrens.

In den letzten Jahren haben der Kauf und Verkauf von Waren über das Internet oder andere elektronische Kommunikationsmittel, der üblicherweise auch als E-Commerce bezeichnet wird, stark zugenommen und die Art und Weise, wie Menschen einkaufen und Geschäfte tätigen, nachhaltig verändert. Der E-Commerce bietet Unternehmen die Möglichkeit, ihre Reichweite zu erweitern und Kunden auf der ganzen Welt zu erreichen, und bietet Verbrauchern die Bequemlichkeit des Online-Shoppings und eine größere Auswahl an Produkten.

Beispielsweise werden im Bereich des Online-Einzelhandels verschiedenste Produkte über eine kaum überschaubare Vielzahl von Online-Shops, teilweise sehr großer, aber auch kleinerer Unternehmen in unterschiedlichsten Variationen angeboten. Aufgrund der Vielzahl der im E-Commerce vertriebenen Produkte ergeben sich besondere Anforderungen an die Transportlogistik, die sich mit der Planung, Steuerung und Optimierung des physischen Transports der im E-Commerce bestellten Waren an ein bestimmtes Transportziel, also beispielsweise einen Einzelhandelskunden, befasst. Im Bereich der Transportlogistik spielen verschiedene Aspekte eine entscheidende Rolle, darunter die Auswahl geeigneter Transportverpackungen und Transportmittel, die Routenplanung, die Lagerung von Gütern, die Verwaltung von Transportaufträgen usw. Diese logistischen Vorgänge betreffen auch den Versand bestellter Ware im B2B-Bereich und den Ersatzteilversand.

Als Transportverpackung kommen bei der ganz überwiegenden Anzahl der im E-Commerce und insbesondere im Online-Einzelhandel umgeschlagenen Waren in allererster Linie aus Papier oder Pappe hergestellte Kartons zum Einsatz. Entsprechend den Abmessungen sowie dem Gewicht der umzuschlagenden Ware werden größere oder kleinere Kartons verwendet und als Transportverpackung um die eigentliche Verpackung der Ware herum zu Transportzwecken verwendet. Wird beispielsweise ein Paar Schuhe von einem Kunden im Online-Einzelhandel bestellt, so wird die Transport-Kartonage um den eigentlichen Schuhkarton herum als Transportverpackung verwendet. Dies hat den Vorteil, dass die eigentliche Warenverpackung beim Transport nicht beschädigt wird und zudem auch nicht unmittelbar ersichtlich ist, um welche Art von Ware es sich handelt, was insbesondere im Falle sehr hochwertiger Waren relevant sein kann.

Aufgrund des starken Wachstums des E-Commerce in den letzten Jahren hat es sich als sehr nachteilig herausgestellt, dass entsprechende Transportkartons in der Regel nur einmal verwendet werden, was eine enorme Menge an Ressourcen, insbesondere Energie und Rohstoffe, erfordert und eine große Menge Altpapier erzeugt.

Neben den üblichen Transportkartons sind auch wiederverwendbare Logistikboxen bekannt, die oftmals aus einem gegenüber einem Pappkarton deutlich festeren Material gefertigt sind und sich daher sehr häufig wiederverwenden lassen. Solche wiederverwendbaren Logistikboxen weisen in der Regel ein Transportbehältnis auf, welches über ein Schließelement, beispielsweise einen Deckel, verschlossen werden kann. Um eine unbefugte Entnahme von Waren aus dem Transportbehältnis zu verhindern, ist es bekannt, das Schließelement an dem Transportbehältnis zu verriegeln und gegen unbefugtes Öffnen zu sichern, wozu unterschiedliche Arten von Schlössern eingesetzt werden können, beispielsweise Vorhängeschlösser, Zahlenschlösser oder auch elektronische Schlösser.

Diese Art von Logistikboxen hat sich aufgrund der Möglichkeit der Mehrfachverwendung als eine insgesamt ressourcensparende Transportverpackung erwiesen, weist im Bereich des E-Commerce und insbesondere im Bereich des Online-Einzelhandels jedoch den Nachteil auf, dass die Logistikbox während des Transports vor unbefugtem Zugriff geschützt sein und sogleich gewährleistet sein muss, dass der adressierte Kunde Zugriff auf die Logistikbox erhält, was mit den bekannten Logistikboxen und -verfahren nicht ohne Probleme umsetzbar ist.

Die vorliegende Erfindung stellt es sich zur **Aufgabe**, ein Verfahren anzugeben, welches auch im Bereich des E-Commerce eine reibungslose Verwendung wiederverwendbarer Logistikboxen erlaubt.

**Gelöst** wird diese Aufgabe durch ein Verfahren mit den Merkmalen des Patentanspruchs 1. Vorteilhafte Ausgestaltungen der Erfindung sind Gegenstand der abhängigen Unteransprüche.

Durch die Übermittlung einer Zugriffsberechtigung an den Kunden, welche zum Entriegeln des Schlosses der jeweiligen Logistikbox zugeordnet ist, wird sichergestellt, dass die Logistikbox während des Transports vor unbefugtem Zugriff gesichert ist. Das mit dem Transport der Logistikbox beauftragte Transportunternehmen verfügt nicht über die Zugriffsberechtigung zum Öffnen der Logistikbox. Die Zugriffsberechtigung wird direkt an den Kunden übermittelt. Sobald die mit den bestellten Waren bestückte Logistikbox beim Kunden eintrifft, kann dieser über die zuvor erhaltene Zugriffsberechtigung die Logistikbox öffnen. Die bestellte Ware kann entnommen werden. Die Logistikbox kann bei dem Transportunternehmen verbleiben und im Anschluss für den nächsten Transportvorgang benutzt werden. Auf diese Weise ergibt sich eine ressourcensparende und sichere Möglichkeit zur Zustellung unterschiedlichster Waren mittels wiederverwendbarer Logistikboxen.

Eine vorteilhafte Ausgestaltung sieht in diesem Zusammenhang zunächst vor, dass der Kunde die an ihn übertragene Zugriffsberechtigung zum Öffnen des Schlosses nutzt. In einer einfachen Ausgestaltung kann der Zugangscode beispielsweise eine einfache Zahlenkombination sein, die in ein entsprechendes Zahlenschloss eingegeben wird. Alternativ können auch elektronische Zugangscodes o. Ä. übermittelt werden.

Von besonderem Vorteil ist eine Ausgestaltung, bei welcher die Zugriffsberechtigung von dem Kunden drahtlos empfangen und/oder drahtlos an das Schloss übermittelt wird. Die drahtlose Übertragung mittels eines Telekommunikationsnetzes, über das Internet oder in sonst geeigneter Weise vereinfacht die erforderlichen Datenübertragungen, einerseits zum Kunden und andererseits vom Kunden zum Schloss.

Eine vorteilhafte Ausgestaltung sieht ferner vor, dass die Übermittlung der Zugriffsberechtigung an das Schloss mittels eines mobilen Telekommunikationsendgeräts erfolgt. Bei dem mobilen Telekommunikationsendgerät kann es sich beispielsweise um ein Smartphone handeln. Die Verwendung eines Telekommunikationsendgeräts bietet den Vorteil, dass auf dessen Speicher auch mehrere Zugriffsberechtigungen abgelegt werden können. Zudem hat der Kunde derartige Telekommunikationsgeräte zumeist direkt bei der Hand und kann mit diesen unmittelbar die Zugriffsberechtigung an das Schloss übertragen und die Logistikbox öffnen.

Eine Ausgestaltung des Verfahrens sieht ferner vor, dass die Zuordnung der Zugriffsberechtigung zu dem Kunden und/oder der Logistikbox in einem Logistikzentrum erfolgt. In dem Logistikzentrum können die Logistikboxen mit den Waren bestückt werden. Alternativ können die Logistikboxen auch seitens eines Online-Shops, eines Herstellers der Waren oder eines Verpackungsdienstleisters mit den Waren bestückt und an das Logistikzentrum übermittelt werden. In dem Logistikzentrum erfolgt die Zuordnung der Zugriffsberechtigung zu dem Kunden anhand der vorliegenden Logistikdokumentation. Bei der Logistikdokumentation kann es sich um elektronische Daten betreffend den Bestellvorgang des Kunden handeln. Ferner erfolgt in dem Logistikzentrum die Zuordnung der Zugriffsberechtigung zu der Logistikbox. Hierzu kann die Zugangsberechtigung in einen elektronischen Speicher der Logistikbox eingespeichert werden. Durch Zuordnung der Zugriffsberechtigung zu dem Kunden und der Logistikbox wird sichergestellt, dass mittels einer bestimmten Zugangsberechtigung nur ein bestimmter Kunde eine bestimmte Logistikbox öffnen kann.

Eine vorteilhafte Ausgestaltung sieht vor, dass in dem Logistikzentrum eine Vielzahl Logistikboxen mit Waren bestückt werden.

Weiterhin ist es vorteilhaft, wenn die Logistikboxen mindestens zwei unterschiedliche Größen aufweisen und entsprechend der Abmessungen der Waren bestückt werden. Beispielsweise können für größere Waren auch größere Logistikboxen verwendet werden. Zudem kann bei einer Mehrfachbestellung mehrerer gleicher oder auch unterschiedlicher Waren an ein und denselben Kunden ebenfalls eine größere Logistikbox verwendet werden.

Im Hinblick auf kompakte Verlade- und Transportmaße hat es sich als vorteilhaft erwiesen, wenn die Größen der Logistikboxen derart bemessen sind, dass zwei Logistikboxen einer kleineren Größe nebeneinander auf eine Logistikbox der nächst größeren Größe stapelbar sind. Auf diese Weise lassen sich Logistikboxen unterschiedlicher Größe passend aufeinander stapeln.

Um mit einer bestimmten Logistikbox auch kleinere Waren zuverlässig und ohne die Gefahr von Transportschäden transportieren zu können, wird in weiterer Ausgestaltung der Erfindung vorgeschlagen, dass der Innenraum des Transportbehältnisses über eine flexibel unterteilbare Fachaufteilung verfügt und die Unterteilung der Fachaufteilung entsprechend den Abmessungen der Waren erfolgt. Beim Bestücken der Logistikbox mit einer bestimmten Ware kann über die im Inneren des Transportbehältnisses vorgesehene Fachaufteilung sichergestellt werden, dass die Größe eines über die Fachaufteilung aufgeteilten Transportfachs an die Abmessung der Ware angepasst ist. Auf diese Weise steht während des Transports nicht zu befürchten, dass die Ware innerhalb des Transportbehältnisses hin und her rutscht.

Zusätzliche Sicherungselemente, wie etwa stoßdämpfende Schaumstoffelemente, insbesondere Polystyrol-Schaumstoffelemente, Polyurethan-Schaumstoffelemente, Luftpolsterfolien, Wellpappeinlagen oder ähnliche Elemente werden nicht benötigt. Auch dies ist einem ressourcensparenden Transport der Ware zuträglich.

Eine in konstruktiver Hinsicht vorteilhafte Ausgestaltung sieht vor, dass das Schließelement als von dem Transportbehältnis abhebbarer oder an diesem über Scharniere schwenkbar angelenkter Deckel ausgebildet ist. Die Ausgestaltung des Schließelements als über Scharniere schwenkbar angelenkter Deckel bietet den Vorteil, dass das Schließelement verliersicher an dem Transportbehältnis angeordnet ist.

Eine weitere vorteilhafte Ausgestaltung des Verfahrens sieht vor, dass die einer mit einer Ware bestückten Logistikbox zugeordnete Zugriffsberechtigung in einem elektronischen Speicher abgelegt wird. Bei dem elektronischen Speicher kann es sich um einen über das Internet zugänglichen elektronischen Datenspeicher handeln. Hier können server- oder cloudbasierte Speicher verwendet werden, auf welche sowohl das Logistikzentrum als auch der Kunde Zugriff hat.

Zum Transport der Logistikboxen zu dem Kunden hat es sich als vorteilhaft erwiesen, dass eine oder mehrere Logistikboxen in dem Logistikzentrum an ein Transportmittel, insbesondere ein Transportfahrzeug, übergeben werden. Bevor die Logistikboxen an das Transportmittel übergeben werden, werden die Zugriffsberechtigungen an den elektronischen Speicher übermittelt. Das Transportmittel erhält eine Information bezüglich des Kunden, an welchen die Logistikbox geliefert werden soll. Bei dem Transportmittel kann es sich insbesondere um ein Transportfahrzeug, wie etwa einen Lieferwagen oder einen LKW handeln. Alternativ wäre auch eine Zustellung mittels anderer Transportmittel, beispielsweise Drohnen oder ähnlicher Transportmittel, denkbar.

Eine die Logistikabläufe weiter vereinfachende Ausgestaltung des Verfahrens sieht vor, dass das Schloss infolge dessen Entriegelung durch den Kunden eine elektronische Empfangsbestätigung erzeugt. Sobald der Kunde die Zugriffsberechtigung an das Schloss übertragen hat, wird dieses, nach Durchführung eines internen Abgleichs mit einem Speicher der Logistikbox, geöffnet. Durch den Öffnungsvorgang des Schlosses wird eine elektronische Empfangsbestätigung erzeugt. Es ist daher nicht erforderlich, dass der Kunde den Erhalt der Ware noch separat quittiert.

In weiterer vorteilhafter Ausgestaltung wird in diesem Zusammenhang vorgeschlagen, dass die Empfangsbestätigung an das Logistikzentrum und/oder den Versender übermittelt wird. Die Übermittlung der Empfangsbestätigung an das Logistikzentrum kann in analoger Weise zu der Übermittlung der Zugriffsberechtigungen über den elektronischen Speicher erfolgen.

Zum Betrieb des elektronischen Schlosses ist es von Vorteil, wenn die Logistikbox über eine eigene Energieversorgung verfügt. In vorteilhafter Weise erfolgt die Energieversorgung der Logistikbox durch eine Batterie, einen Akku und/oder ein induktives Ladesystem.

Für den Fall, dass als Energieversorgung eine Batterie oder ein Akku verwendet wird, wird in weiterer Ausgestaltung der Erfindung vorgeschlagen, dass sich das Schließelement im Falle einer leeren Batterie oder eines leeren Akkus nicht an dem Transportbehältnis verriegeln lässt. Auf diese Weise wird sichergestellt, dass die Box nicht geschlossen ist, sofern die Energieversorgung entleert ist. Hierdurch werden Schwierigkeiten, die sich aus einer geschlossenen Logistikbox bei entleerter Batterie oder entleertem Akku ergeben könnten, vermieden. Es muss zunächst dafür gesorgt werden, dass entweder eine geladene Batterie oder ein geladener Akku in der Logistikbox vorhanden ist, bevor dann das Schließelement erneut an dem Transportbehältnis verriegelt werden kann.

Eine weitere vorteilhafte Ausgestaltung sieht vor, dass die Logistikbox mit einem GPS-Sender oder einem ähnlichen Positionssender, der eine Positionsangabe der Logistikbox sendet, versehen ist. Über den GPS-Sender lassen sich die Positionen der Logistikboxen nachverfolgen. Auch dies ist einer effizienten Transportlogistik zuträglich, da sich bestimmte Routen, Lagerungen, Umschlagplätze usw. anhand der jeweiligen Position der Logistikboxen optimieren lassen.

Eine im Hinblick auf eine ressourcensparende Ausgestaltung des Verfahrens vorteilhafte Weiterbildung der Erfindung sieht ferner vor, dass die Logistikbox aus einem recycelten Material besteht und/oder recycelbar ausgebildet ist. Durch die Verwendung recycelten Materials ergibt sich eine ressourcensparende Ausgestaltung.

Schließlich wird mit Blick auf das Verfahren vorgeschlagen, dass die Logistikbox mit einer oder mehreren Werbeflächen versehen ist. Über die Werbeflächen lassen sich dem Kunden gezielt Werbemaßnahmen präsentieren. Bei der Werbefläche kann es sich beispielsweise um ein elektronisches Display handeln. Auf dem Display können anhand verschiedener Parameter kundenspezifisch unterschiedliche Werbeinhalte angezeigt werden. Die jeweiligen Werbeinhalte können sich nach der Art oder dem Wert der bestellten Ware, dem Wohnort des Kunden oder diversen anderen Parametern individuell anpassen lassen. Durch entsprechende Werbemaßnahmen lassen sich die Kosten für den Transport der Ware reduzieren.

Schließlich wird eine Logistikbox zur Durchführung eines Verfahrens nach einem der vorhergehenden Ansprüche vorgeschlagen. Die Logistikbox ist derart ausgestaltet, dass sich die entsprechenden Verfahrensschritte mit dieser durchführen lassen. Es ergeben sich die im Zusammenhang mit dem Verfahren erläuterten Vorteile.

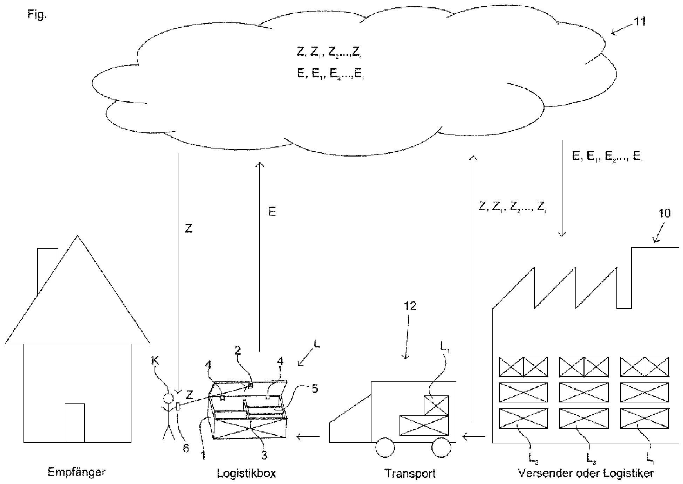

Weitere Einzelheiten und Vorteile eines erfindungsgemäßen Verfahrens werden nachfolgend unter Zuhilfenahme der beigefügten Zeichnung eines Ausführungsbeispiels beispielhaft erläutert. Darin zeigt die einzige Figur in stark schematisierter Ansicht die Abläufe eines Verfahrens zur Zustellung von Waren an einen Kunden.

Die Darstellung in der Figur zeigt ein Logistikzentrum 10. In dem Logistikzentrum 10 werden verschiedene logistische Aufgaben im Zusammenhang mit der Lagerung, dem Umschlag und der Verteilung von Waren erfüllt, die im E-Commerce bestellt werden. Derartige Logistikzentren 10 sind wichtige Schaltzentren in den Lieferketten und Logistiknetzwerken, um Waren effizient von einem Hersteller oder Händler hin zu einem Kunden K zu verteilen.

Wie die Darstellung in der Figur dies zeigt, wird in dem Logistikzentrum 10 eine Vielzahl von Logistikboxen L gelagert, wobei der jeweils tiefgestellte Index jeweils einer speziellen Kennung der jeweiligen Logistikbox entspricht. Anhand der Kennung lassen sich die Logistikboxen L eindeutig identifizieren.

Wie die Darstellung in der Figur dies ferner erkennen lässt, weisen die Logistikboxen L unterschiedliche Größen auf. Beim Ausführungsbeispiel sind zwei Größen vorgesehen. Die kleinere Größe ist derart bemessen, dass zwei kleinere Logistikboxen L auf jeweils eine größere Logistikbox L stapelbar sind. Auf diese Weise lassen sich die Logistikboxen L zu kompakten Stapeln auftürmen.

Die Bestückung der Logistikboxen L kann innerhalb des Logistikzentrums 10 erfolgen. Alternativ könnten die Logistikboxen L auch bereits beim Hersteller oder Händler der entsprechenden Ware bestückt werden.

Im Logistikzentrum 10 erfolgt die Zuordnung einer bestimmten Zugriffsberechtigung Z zu einer bestimmten Logistikbox L. Die auch bei den Zugriffsberechtigungen Z als tiefgestellter Index eingezeichneten Kennungen sind den Kennungen der Logistikbox L zugeordnet. Beispielsweise lässt sich mit der Zugriffskennung Z₃ die Logistikbox L₃ öffnen, nicht aber die anderen Logistikboxen L₁, L₂ usw. Die Zuordnung der Zugriffsberechtigungen Z zu den Logistikboxen L erfolgt bevor die Logistikboxen L an ein Transportfahrzeug 12 übergeben werden. Zudem werden die Zugriffsberechtigungen Z in einen elektronischen Speicher 11 abgelegt und der Kunde K in die Lage versetzt, die zu seinem Bestellvorgang passende Zugriffsberechtigung Z aus dem Speicher 11 herunterzuladen.

Über das Transportmittel 12, bei welchem es sich beim Ausführungsbeispiel um ein als Lieferwagen ausgestaltetes Transportfahrzeug handelt, werden mehrere Logistikboxen L an die jeweiligen Kunden K zugestellt.

Die Zustellung beim Kunden K ist im linken Bereich der Figur dargestellt.

Der Kunde K hat über den elektronischen Speicher 11 bereits eine Zugriffsberechtigung Z erhalten, über welche er Zugriff auf die in der an ihn adressierte Logistikbox L erhält. Beim Ausführungsbeispiel hat der Kunde K die Zugriffsberechtigung Z drahtlos aus dem Speicher 11 heruntergeladen. Hierzu kann auf dem Smartphone 6 des Kunden K eine bestimmte App installiert sein. Über die App kann die Zugriffsberechtigung Z aus dem elektronischen Speicher 11 heruntergeladen werden. Ferner kann über das Smartphone 6 bzw. die auf diesem installierten App die Zugriffsberechtigung Z drahtlos an das elektronische Schloss 3 der Logistikbox L übermittelt werden. Die drahtlose Übermittlung zwischen dem Smartphone 6 und dem elektronischen Schloss 3 kann beispielsweise mittels Bluetooth oder anderer drahtloser Kommunikationskanäle erfolgen.

Sobald die Zugriffsberechtigung Z an das elektronische Schloss 3 der Logistikbox L übertragen wurde, wird innerhalb der Logistikbox 2 geprüft, ob die Zugangsberechtigung Z mit der der jeweiligen Logistikbox L zugeordneten Zugangsberechtigung Z übereinstimmt. Sofern dies der Fall ist, entriegelt das Schloss 3. Nach Entriegeln des Schlosses 3 kann das Schließelement 2 von dem Transportbehältnis 1 abgehoben werden. Beim Ausführungsbeispiel ist das Schließelement 2 über zwei Scharniere 4 an dem Transportbehältnis angelenkt und kann nach Entriegeln des Schlosses 3 nach oben weggeklappt werden. Sodann wird der Blick auf den Innenraum des Transportbehältnisses 1 freigegeben.

Wie die Darstellung in der Figur dies weiter erkennen lässt, ist der Innenraum des Transportbehältnisses 1 über eine flexible Fachaufteilung 5 flexibel an die Abmessungen der jeweils transportierten Ware anpassbar. Hierdurch kann auf zusätzliche Transportsicherungsmittel, wie etwa Schaumstoffelemente, Luftpolsterfolien o. Ä. verzichtet werden.

Durch Übertragung der Zugriffsberechtigung Z an das elektronische Schloss 3 wird nicht nur das Schloss 3 entriegelt. Denn durch Entriegeln des Schlosses 3 wird sogleich auch eine Empfangsbestätigung E erzeugt. Auch die Empfangsbestätigung E weist eine durch den tiefgestellten Index gekennzeichnete, individuelle Kennung auf. Die Kennung der Empfangsbestätigung E ist der Kennung der jeweiligen Logistikbox L sowie der Kennung der Zugangsberechtigung Z zugeordnet. Es ist daher nicht erforderlich, dass der Kunde K dem mit der Zustellung der Ware beauftragten Zustellperson eine Empfangsbestätigung quittiert. Die Empfangsbestätigung E wird elektronisch erzeugt und ebenfalls in dem elektronischen Speicher 11 abgelegt.

Aus dem elektronischen Speicher 11 können die dort abgelegten Empfangsbestätigungen E auch von dem Logistikzentrum 10 abgerufen werden. Das Logistikzentrum 10 erhält auf diesem Weg eine Bestätigung über die erfolgte Zustellung der einzelnen Logistikboxen L bei den jeweiligen Kunden K.

Nachdem das elektronische Schloss 3 entriegelt und das Schließelement 2 geöffnet wurde, kann der Kunde K die Ware entnehmen. Das mit dem Transport der Logistikboxen L beauftragte Unternehmen kann die entleerte Logistikbox L wieder mitnehmen. Es ist nicht erforderlich, dass das Transportbehältnis, also die Logistikbox L, beim Kunden K verbleibt. Die Logistikbox L kann daher unmittelbar für den nächsten Logistikvorgang verwendet werden.

Das vorstehend beschriebene Verfahren zur Zustellung von Waren zeichnet sich durch eine ressourcensparende und effiziente Zustellung unterschiedlicher Waren an eine Vielzahl von Kunden K aus und ist auch für die Vielzahl an Bestellungen im E-Commerce sehr geeignet. Da die Zugriffsberechtigung Z auf einem von dem physischen Warentransportweg unterschiedlichen Datenübertragungsweg an den Kunden K übertragen wird, ergibt sich zudem eine manipulationssichere Zustellung der Waren. Es ist nicht möglich, dass die Logistikboxen L während des Transports von dem Logistikzentrum 10 an den Kunden K unbefugt geöffnet werden.

### Bezugszeichen:

- 1: Transportbehältnis
- 2: Schließelement
- 3: Schloss
- 4: Scharnier
- 5: Fachaufteilung
- 6: Smartphone
- 10: Logistikzentrum
- 11: Speicher
- 12: Transportmittel

- K: Kunde

- L, L₁, L₂ ... Lᵢ: Logistikbox
- Z, Z₁, Z₂ ... Zᵢ: Zugriffsberechtigung
- E, E₁, E2... Eᵢ: Empfangsbestätigung

## Patentansprüche

1. Verfahren zur Zustellung von Waren an einen Kunden mit einer wiederverwendbaren Logistikbox (L), die ein über ein Schließelement (2) verschließbares Transportbehältnis (1) und ein elektronisches Schloss (3) zur Verriegelung des Schließelements (2) in dessen geschlossener Stellung aufweist,
**dadurch gekennzeichnet,**
**dass** zum Entriegeln des Schlosses (3) eine der Logistikbox (L) zugeordnete Zugriffsberechtigung (Z) an den Kunden übermittelt wird.

2. Verfahren nach Anspruch 1, **dadurch gekennzeichnet, dass** der Kunde die an ihn übertragene Zugriffsberechtigung (Z) zum Öffnen des Schlosses (3) nutzt.

3. Verfahren nach Anspruch 1 oder 2, **dadurch gekennzeichnet, dass** die Zugriffsberechtigung (Z) von dem Kunden drahtlos empfangen und/oder drahtlos an das Schloss (3) übermittelt wird.

4. Verfahren nach Anspruch 3, **dadurch gekennzeichnet, dass** die Übermittlung der Zugriffsberechtigung (Z) an das Schloss (3) mittels eines mobilen Telekommunikationsendgeräts erfolgt.

5. Verfahren nach einem der vorhergehenden Ansprüche, **dadurch gekennzeichnet, dass** die Zuordnung der Zugriffsberechtigung (Z) zu dem Kunden und/oder der Logistikbox (L) in einem Logistikzentrum (10) erfolgt.

6. Verfahren nach Anspruch 5, **dadurch gekennzeichnet, dass** in dem Logistikzentrum (10) eine Vielzahl Logistikboxen (L) mit Waren bestückt werden.

7. Verfahren nach Anspruch 6, **dadurch gekennzeichnet, dass** die Logistikboxen (L) mindestens zwei unterschiedliche Größen aufweisen und entsprechend der Abmessungen der Waren bestückt werden.

8. Verfahren nach Anspruch 7, **dadurch gekennzeichnet, dass** die Grö-ßen der Logistikboxen (L) derart bemessen sind, dass zwei Logistikboxen (L) einer kleineren Größe nebeneinander auf eine Logistikbox (L) der nächst größeren Größe stapelbar sind.

9. Verfahren nach einem der Ansprüche 6 bis 8, **dadurch gekennzeichnet, dass** der Innenraum des Transportbehältnisses (1) über eine flexibel unterteilbare Fachaufteilung (5) verfügt und die Unterteilung der Fachaufteilung (5) entsprechend der Abmessungen der Waren erfolgt.

10. Verfahren nach einem der vorhergehenden Ansprüche, **dadurch gekennzeichnet, dass** das Schließelement (2) als von dem Transportbehältnis (1) abhebbarer oder an diesem über Scharniere (4) schwenkbar angelenkter Deckel ausgebildet ist.

11. Verfahren nach einem der vorhergehenden Ansprüche, **dadurch gekennzeichnet, dass** die einer mit einer Ware bestückten Logistikbox (L) zugeordnete Zugriffsberechtigung (Z) in einem elektronischen Speicher (11) abgelegt wird.

12. Verfahren nach Anspruch 11, **dadurch gekennzeichnet, dass** die Zugriffsberechtigung (Z) über den elektronischen Speicher (11) an den Kunden übermittelt wird oder dass dieser die Zugriffsberechtigung (Z) aus dem elektronischen Speicher (11) abruft.

13. Verfahren nach einem der vorhergehenden Ansprüche, **dadurch gekennzeichnet, dass** das Schloss (3) infolge dessen Entriegelung durch den Kunden eine elektronische Empfangsbestätigung (E) erzeugt.

14. Verfahren nach einem der vorhergehenden Ansprüche, **dadurch gekennzeichnet, dass** die Energieversorgung der Logistikbox (L) durch ein LCD-Panel, eine Batterie, einen Akku und/oder ein induktives Ladesystem erfolgt.

15. Logistikbox zur Durchführung eines Verfahrens nach einem der vorhergehenden Ansprüche.
